# EUROPÄISCHE PATENTSCHRIFT

(11) **EP 0 733 844 B1**
(45) Veröffentlichungstag und Bekanntmachung des Hinweises auf die Patenterteilung: **06.10.1999**
(21) Anmeldenummer: 96104364.3
(22) Anmeldetag: 19.03.1996
(51) Int. Cl.: F16L 37/088, F16L 37/084

(54) **Anschlussvorrichtung für Rohrleitungen**
Conduit connection device
Dispositif de connexion pour conduites

(30) Priorität: 21.03.1995 DE 19510193
(43) Veröffentlichungstag der Anmeldung: 25.09.1996
(73) Patentinhaber: Armaturenfabrik Hermann Voss GmbH + Co., 51688 Wipperfürth (DE)
(72) Erfinder: Brandt, Josef, 51688 Wipperfürth (DE)
(74) Vertreter: Patentanwälte Dr. Solf & Zapf

(56) Entgegenhaltungen:
- GB-A- 2 066 913
- GB-A- 2 073 350
- US-A- 3 743 326
- US-A- 4 407 526
- US-A- 5 314 216

## Beschreibung

Die vorliegende Erfindung betrifft eine Anschlußvorrichtung zum schnellen und lösbaren Anschluß mindestens einer Kunststoff-Rohrleitung, bestehend aus einem Gehäuseteil mit mindestens einer Aufnahmeöffnung zum Einstecken der Rohrleitung sowie aus einem in der Aufnahmeöffnung angeordneten Klemmring, der zum Arretieren der Rohrleitung über einen Außenkonus mit einem Innenkonus des Gehäuseteils zusammenwirkt, wobei das Gehäuseteil zwecks Lösbarkeit der Rohrleitung zweiteilig aus einem Basisteil und einem lösbar mit diesem verbundenen, den Innenkonus aufweisenden Einsatzteil besteht und das Einsatzteil über eine schnappbare Formschlußverbindung mit dem Basisteil verbunden ist.

Bei einer derartigen, aus der US-A-5 314 216 bekannten Rohrkupplung weist das den Innenkonus aufweisende Einsatzteil (holding member) auf der Seite einer Einsteckmündung für die Rohrleitung eine Vielzahl von zungenförmigen, elastischen Rastarmen auf. An diese Rastarme schließt sich in Einsteckrichtung ein Ringteil mit dem Innenkonus für den Klemmring an. Hierbei ist nachteilig, daß Verunreinigungen wie Staub, Schmutz und Feuchtigkeit, nahezu ungehindert in den Bereich des Klemmrings gelangen können.

Die GB-A-2 066 913 beschreibt im Grunde auch eine solche Rohrverbindung, wobei ein den Innenkonus für den Klemmring aufweisendes Gehäuseteil entweder verrastet oder verschraubt wird. Dabei könnten in einem die Rohrleitung umschließenden Mündungsbereich Verunreinigungen praktisch ungehindert in den Bereich des Klemmrings eindringen.

Die US-A-4 407 526 beschreibt eine insofern unterschiedliche Rohrkupplung, als dabei kein lösbares Einsatzteil, sondern ein einteiliges Gehäuse vorgesehen ist. Dabei weist das Gehäuse auf seiner Einstecköffnungsseite eine flexible Dichtlippe auf, die sich axial nach außen, d.h. in die der Einsteckrichtung entgegengesetzte Richtung, erstreckt. Daraus könnten aber Probleme beim Einstecken der Rohrleitung resultieren, weshalb gemäß der Lehre dieser Druckschrift ein spezieller, angefaster bzw. abgerundeter Ring vorgesehen sein soll, um beim Einstecken ein Umklappen der Dichtlippe zu vermeiden. Einfach rechtwinklig abgeschnittene Rohre könnten somit nicht ohne weiteres, d.h. nicht ohne den speziellen "Chamfer-Ring", gesteckt werden.

Eine weitere Anschlußvorrichtung ist aus dem DE-U 93 07 361 bekannt. Diese Anschlußvorrichtung hat sich im wesentlichen gut bewährt, da sie einerseits einen relativ einfachen und schnellen Anschluß der Rohrleitung durch einfaches axiales Einstecken ermöglicht; weitere Montageschritte sind dann nicht mehr erforderlich. Andererseits gewährleistet diese bekannte Vorrichtung durch eine spezielle Ausgestaltung im Bereich des Klemmringes eine besonders gute Arretierung der Rohrleitung bei gleichzeitig einfacher und kostengünstiger Herstellbarkeit des Klemmringes. Allerdings hat sich gezeigt, daß die Handhabung bei der Montage der Einzelteile sowie auch beim Lösen der Rohrleitung noch nicht optimal ist, da das Einsatzteil als Einschraubstück ausgebildet ist, welches mit einem Außengewinde in ein Innengewinde des Basisteils eingeschraubt ist. Hierdurch ist auch die Herstellung der Einzelteile relativ aufwendig. Zudem ist auch die Abdichtung nach außen recht kompliziert, da eine erste Druckdichtung zwischen dem Basisteil und dem Einsatzteil und eine zweite Druckabdichtung innerhalb des Einsatzteils zur Anlage an der Rohrleitung vorgesehen sind. Zusätzlich ist eine weitere Abdichtung insbesondere gegen Staub und Feuchtigkeit in Form eines im Einsatzteil gelagerten Dichtringes vorgesehen.

Auch die DE-A/C 30 11 430 beschreibt eine ähnliche Vorrichtung, wobei aber in einer Ausführungsform das Gehäuseteil aus einem Basisteil und einer auf einen Außengewindeabschnitt des Basisteils aufschraubbaren Überwurfmutter besteht. Im übrigen gelten die obigen Ausführungen hier sinngemäß.

Die DE 40 19 408 A1 beschreibt eine insofern andere Steckkupplung, als diese nicht unmittelbar zum Einstecken des Endes einer Rohrleitung geeignet ist, sondern dabei ist ein spezieller Stecker vorgesehen, der auf seinem Außenumfang einen einstückig angeformten Ringstegabschnitt aufweist. Deshalb muß nach dem Einsetzen des Steckers als zusätzlicher Montageschritt eine längsgeschlitzte Sicherungshülse montiert werden, indem diese über den Stecker geschoben und mit dem Gehäuse verrastet wird. Der Ringstegabschnitt des Steckers besitzt einen Außenkonus, der mit einem Innenkonus der Sicherungshülse derart zusammenwirkt, daß bei Systemdruckbeaufschlagung die längsgeschlitzte und dadurch radial elastisch verformbare Sicherungshülse durch eine über die Konusflächen erzeugte, radial nach außen gerichtete Kraft gespreizt wird. Hierdurch soll eine druckabhängig stärker werdende Verspannung der Sicherungshülse erreicht werden.

Der Erfindung liegt die Aufgabe zugrunde, eine Anschlußvorrichtung der eingangs beschriebenen Art zu schaffen, bei der der Bereich des Klemmrings wirksam vor Verunreinigungen geschützt ist.

Erfindungsgemäß wird dies durch die kennzeichnenden Merkmale des neuen Anspruchs 1 erreicht. Die erfindungsgemäße Dichtlippe dient zur Abdichtung insbesondere gegen Staub, Schmutz und Feuchtigkeit (Spritzwasser), indem sie zur unmittelbaren dichtenden Anlage an dem Außenumfang der Rohrleitung gelangt. Dabei wird durch die besondere Ausrichtung der Dichtlippe vorteilhafterweise eine einfache und problemlose Rohrmontage erreicht, denn die sich schon grundsätzlich in Einsteckrichtung schräg nach innen erstreckende Dichtlippe wird beim Einstecken der Rohrleitung nur etwas radial nach außen elastisch aufgeweitet, so daß sie dann umfangsgemäß dichtend anliegt. Dies ist vorteilhafterweise auch bei endseitig rechtwinklig abgeschnittenen Rohrstücken ohne spezielle Anfasung möglich.

Weiterhin bleibt auch eine einfache Montage der Einzelteile erhalten, weil das Einsatzteil über eine schnappbare Formschlußverbindung mit dem Basisteil verbunden ist. Es handelt sich um eine Rast- bzw. Clipsverbindung, wodurch das Basisteil und das Einsatzteil lediglich ineinandergesteckt zu werden brauchen, bis die Rastmittel eine formschlüssige Verbindung herstellen. Ein Lösen der Rohrleitung ist ebenfalls sehr einfach, indem die Rastverbindung lösbar ausgestaltet ist. Zweckmäßigerweise besitzt hierzu das Einsatzteil federelastische Rastarme, wobei jeder Rastarm mit einem Rastnocken radial in Richtung nach außen in eine Rastöffnung des Basisteils eingreift, und wobei jeder Rastarm zweckmäßigerweise einen im wesentlichen axial, d.h. etwa parallel zur Steckachse, aus dem Basisteil ragenden Betätigungsabschnitt aufweist. Somit kann jeder Rastarm über den Betätigungsabschnitt von außen manuell oder gegebenenfalls mit einem geeigneten Werkzeug zum Lösen betätigt werden.

Zumindest das Einsatzteil, vorzugsweise auch das Basisteil, kann vorteilhafterweise als einstückiges Kunststoff-Formteil sehr preiswert hergestellt werden. Dabei kann das Einsatzteil auf einfache Weise mit der inneren, umlaufenden flexiblen bzw. elastischen Dichtlippe hergestellt werden. Zur eigentlichen Druckabdichtung ist vorzugsweise ein Dichtring innerhalb des Basisteils zwischen diesem und der Rohrleitung angeordnet. Hierdurch erübrigt sich vorteilhafterweise eine zusätzliche Abdichtung zwischen dem Basisteil und dem Einsatzteil. Besonders vorteilhaft ist es, wenn der Druck-Dichtring auf der dem Einsatzteil abgekehrten Seite des Klemmringes zwischen diesem und einer Ringstufe des Basisteils derart angeordnet ist, daß die eingesteckte Rohrleitung bei einer Bewegung in Löserichtung durch kraftschlüssige Mitnahme des Dichtringes den Klemmring ebenfalls mitnimmt und so zur Erhöhung der radialen Klemmkraft gegen den Innenkonus bewegt. Der Dichtring unterstützt somit vorteilhafterweise die Arretierungsfunktion des Klemmringes gegen ungewolltes, z.B. druckbedingtes Lösen der Rohrleitung.

Im Zusammenhang damit ist es zudem vorteilhaft, das Einsatzteil im Bereich der schnappbaren Formschlußverbindung so auszubilden, daß die axiale Haltekraft der Rastverbindung bei Ansteigen der entgegengerichteten, durch mechanischen Zug an der Leitung und/oder durch Beaufschlagung der Anschlußvorrichtung mit innerem Systemdruck bewirkten Lösekraft ebenfalls zunimmt. Dies kann vor allem durch einen Rastwirkflächen-Hinterschneidungswinkel größer 90° erreicht werden.

In einer vorteilhaften Weiterbildung der Erfindung ist das Gehäuse unlösbar oder lösbar mit einem - praktisch beliebigen - Aggregateteil verbindbar, wozu das Gehäuseteil einen dichtend in eine Stecköffnung des Aggregateteils einsteckbaren Einsteckabschnitt aufweist und dieser Einsteckabschnitt in der Stecköffnung über eine schnappbare Formschlußverbindung gehalten wird. Vorzugsweise ist hierbei die schnappbare Formschlußverbindung durch die eingesteckte Rohrleitung gegen Lösen arretierbar. Eine bevorzugte konstruktive Ausgestaltung hierzu wird im folgenden noch beschrieben werden. Das Gehäuseteil fungiert somit als eine Art "Adapter" zum Anschluß einer Rohrleitung an beliebige Aggregateteile, bei denen es sich beispielsweise um Ventilgehäuse oder sonstige Komponenten z.B. einer Fahrzeug-Bremsanlage (insbesondere Druckluftbremse) handeln kann. Hierbei ist auch die Verbindung zwischen dem Gehäuseteil und dem Aggregateteil einfach und preiswert, aber dennoch sehr funktionell.

Weitere vorteilhafte Ausgestaltungsmerkmale der Erfindung sind in den Unteransprüchen sowie der folgenden Beschreibung enthalten.

Anhand der Zeichnung soll nun die Erfindung beispielhaft näher erläutert werden. Dabei zeigen:
- Fig. 1: einen Axialschnitt - bezogen auf die Steckachse - durch eine erfindungsgemäße Anschlußvorrichtung mit zusätzlicher Darstellung einer Rohrleitung vor dem Einstecken,
- Fig. 2: eine Ansicht analog zu Fig. 1 mit eingesteckter und arretierter Rohrleitung,
- Fig. 2a: eine vergrößerte Detaildarstellung des Bereichs X in Fig. 2 in einer vorteilhaften Ausgestaltung der erfindungsgemäßen Rastverbindung,
- Fig. 3: eine Schnittansicht in der Schnittebene III-III gemäß Fig. 1 eines Basisteils der erfindungsgemäßen Anschlußvorrichtung (ohne Innenteile),
- Fig. 4: eine Schnittansicht in der Schnittebene wie in Fig. 1 eines mit dem Basisteil nach Fig. 3 verbindbaren Einsatzteils der erfindungsgemäßen Anschlußvorrichtung,
- Fig. 5: eine Draufsicht des Einsatzteils in Pfeilrichtung V gemäß Fig. 4,
- Fig. 6: einen Axialschnitt der Anschlußvorrichtung analog zu Fig. 1, jedoch in einer vorteilhaften Weiterbildung mit zusätzlicher Darstellung eines Aggregateteils vor Verbindung,
- Fig. 7: eine Ansicht analog zu Fig. 6 im mit dem Aggregateteil verbundenen Zustand der Anschlußvorrichtung, jedoch vor Einstecken einer Rohrleitung und
- Fig. 8: eine Ansicht analog zu Fig. 7, wobei die Rohrleitung eingesteckt und arretiert ist.

In den verschiedenen Figuren der Zeichnung sind gleiche Teile stets mit den gleichen Bezugszeichen versehen.

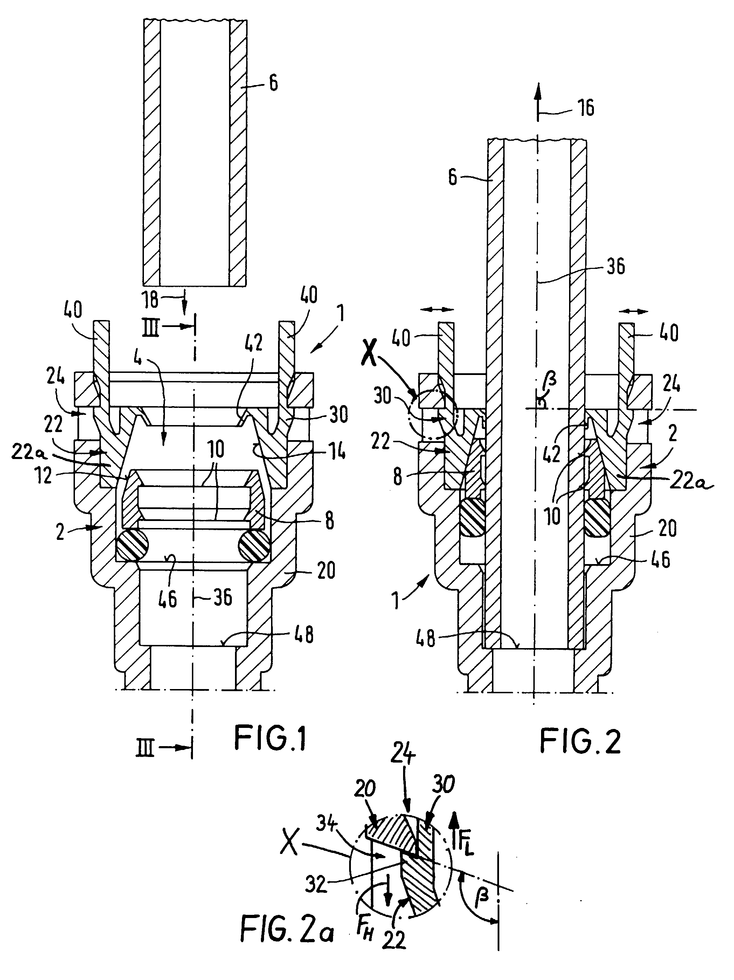

Wie sich zunächst aus Fig. 1 und 2 ergibt, besteht eine erfindungsgemäße Anschlußvorrichtung 1 aus einem Gehäuseteil 2 mit einer einseitig offenen Aufnahmeöffnung 4 zum axialen Einstecken eines Endes einer Rohrleitung 6 sowie aus einem in dem Gehäuseteil 2 bzw. in der Aufnahmeöffnung 4 angeordneten Klemmring 8 zum Arretieren der axial eingesteckten Rohrleitung 6. Dabei ermöglicht die Anschlußvorrichtung 1 eine Montage der Rohrleitung 6 durch einfaches Einstecken in das Gehäuseteil 2 ohne sonstige Montageschritte, denn die Anschlußvorrichtung 1 mit Gehäuseteil 2 und Klemmring 8 ist vorher bereits fertig montiert. Der Klemmring 8 sitzt derart in einer Erweiterung der Aufnahmeöffnung 4, daß er letztere - und damit auch die eingesteckte Rohrleitung 6 - umschließt. Der Klemmring 8 weist an einer Stelle seines Umfanges einen axial und radial durchgehenden Längs- bzw. Radialschlitz, d.h. eine Unterbrechung in seinem Umfangsverlauf, auf, wodurch er radialelastisch aufgeweitet und verengt werden kann. In seinem inneren Umfangsbereich besitzt der Klemmring 8 mindestens eine radial nach innen ragende, umlaufende Schneidkante 10; im dargestellten Ausführungsbeispiel sind jedoch zwei axial beabstandete Schneidkanten 10 vorgesehen. Der Klemmring 8 besitzt ferner einen Außenkonus 12, der zum Arretieren der Rohrleitung mit einem Innenkonus 14 des Gehäuseteils 2 derart zusammenwirkt, daß bei einem Zug in Löserichtung (Pfeilrichtung 16 in Fig. 2) an der Rohrleitung 6, d.h. bei einer Bewegung entgegen der Einsteckrichtung (Pfeil 18 in Fig. 1), der Klemmring 8 durch kraftschlüssige Anlage seiner Schneidkanten 10 mitgenommen wird, bis sein Außenkonus 12 zur Anlage an den Innenkonus 14 des Gehäuseteils 2 gelangt. Bei weitergehendem Zug wird über die Konen 12,14 eine radial nach innen gerichtete Kraft erzeugt, durch die der Klemmring 8 - in an sich bekannter Weise - elastisch verengt wird, so daß die Schneidkanten 10 kraft- und/oder formschlüssig mit dem im wesentlichen glattflächigen, zylindrischen Rohr-Außenumfang zusammenwirken und so das Rohr gegen Herausziehen arretiert wird.

Um die Möglichkeit einer nachfolgenden Lösbarkeit der Rohrleitung 6 zu schaffen, besteht das Gehäuseteil 2 aus zwei lösbar miteinander verbundenen Teilen, und zwar aus einem Basisteil 20 und einem Einsatzteil 22. Hierbei weist das Einsatzteil 22 im Bereich eines in Umfangsrichtung geschlossenen, d.h. ungeschlitzten Ringteils 22a den Innenkonus 14 auf, so daß nach Lösen des Einsatzteils 22 vom Basisteil 20 die Rohrleitung 6 gemeinsam mit dem Klemmring 8 und dem Einsatzteil 22 entnommen werden kann. Durch seine ungeschlitzte Umfangskontur ist der Ringteil 22a hinreichend "formstabil", um die beim Verengen des Klemmrings 8 über die Konusflächen aufretenden Radialkräfte aufnehmen zu können.

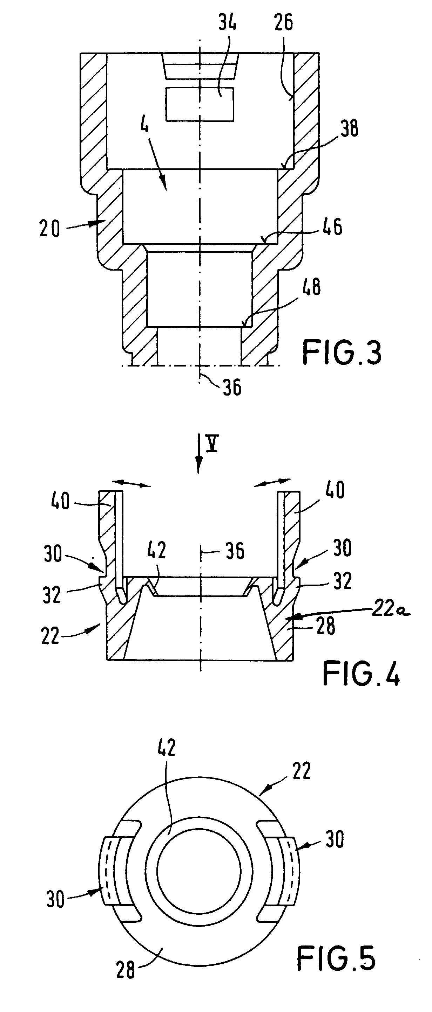

Dabei ist das Einsatzteil 22 über eine schnappbare Formschlußverbindung 24 mit dem Basisteil 20 lösbar verbunden, d.h. verrastet bzw. verklipst. Hierzu besteht das Einsatzteil 22 bevorzugt aus einem den ungeschlitzten Ringteil 22a bildenden, zumindest bereichsweise in eine Erweiterung 26 der Aufnahmeöffnung 4 (vgl. hierzu Fig. 3) des Basisteils 20 einsetzbaren, den Innenkonus 14 aufweisenden Zentrierring 28 und mindestens zwei insbesondere gleichmäßig über den Umfang verteilt angeordneten, federelastischen Rastarmen 30 (vgl. Fig. 4 und 5). Hierbei greift jeder Rastarm 30 mit einem Rastnocken 32 in Richtung radial nach außen in eine Rastöffnung 34 des Basisteils 20 ein, und zwar - um einen "echten" Formschluß zu erreichen - mit einem Wirkflächen-Hinterschneidungswinkel β ≥ 90° (vgl.Fig. 2 und 2a). Die Rastarme 30 erstrecken sich hierbei im wesentlichen axial, d.h. etwa parallel zur Steckachse 36. Im dargestellten Ausführungsbeispiel sind zwei Rastarme 30 vorgesehen, die aufgrund der über den Umfang gleichmäßigen, radialsymmetrischen Verteilung diametral gegenüberliegend angeordnet sind. Der ungeschlitzte Zentrierring 28 ist vorzugsweise auf einer Ringstufe 38 (s. Fig. 3) innerhalb des Basisteils 20 abgestützt. Das Einsatzteil 22 ist bevorzugt als einstückiges Formteil aus Kunststoff hergestellt. Entsprechendes gilt vorzugsweise auch für das Basisteil 20.

Wie sich zudem aus Fig. 1 und 2 ergibt, weist jeder Rastarm 30 zweckmäßigerweise einen im wesentlichen axial, d.h. parallel zur Steckachse 36 aus dem Basisteil 20 ragenden Betätigungsabschnitt 40 auf. Die Betätigungsabschnitte 40 sind somit von außen zugänglich zum manuellen Betätigen der Rastarme 30. Hierzu werden die Betätigungsabschnitte 40 radial nach innen aufeinanderzu bzw. in Richtung der Rohrleitung 6 bewegt, bis die Rastnocken 32 aus den Rastöffnungen 34 gelangen und so der Formschluß aufgehoben wird. Es kann dann die Rohrleitung 6 zusammen mit dem Einsatzteil 22 und dem Klemmring 8 entnommen werden.

Gemäß Fig. 2a ist es besonders vorteilhaft, wenn die Rastverbindung 24 mit einem Hinterschneidungswinkel β > 90° ausgebildet ist. Hierdurch wird erreicht, daß bei Auftreten bzw. bei Anstieg einer in Löserichtung (Pfeil 16 in Fig. 2) wirkenden Kraft F_{L} auch die Haltekraft F_{H} entsprechend zunimmt. Dies führt zu einer hohen Sicherheit gegen ungewolltes Lösen der Rohrleitung 6.

Gemäß der Erfindung weist das Einsatzteil 22 eine innere umlaufende Dichtlippe 42 zur dichtenden Anlage auf der Außenumfangsfläche der Rohrleitung 6 auf. Vor dem Einstecken der Rohrleitung 6 erstreckt sich diese flexible, elastische Dichtlippe 42 gemäß Fig. 1 in Einsteckrichtung schräg nach innen und wird dann durch die eingesteckte Rohrleitung 6 gemäß Fig. 2 etwas nach außen aufgeweitet, so daß sie dichtend anliegt. Die Dichtlippe 42 dient zur Abdichtung insbesondere gegen Staub, Schmutz und Feuchtigkeit (Spritzwasser). Dabei ist die Dichtlippe 42 ebenfalls einstückig als dünner, lamellenartiger Ringsteg angeformt.

Wie sich weiterhin aus Fig. 1 und 2 ergibt, ist ein Dichtring 44 zur druckdichten Abdichtung bevorzugt auf der dem Einsatzteil 22 abgekehrten Seite des Klemmringes 8 zwischen letzterem und einer Ringstufe 46 des Basisteils 20 (vgl. Fig. 3) derart angeordnet, daß die eingesteckte Rohrleitung 6 bei einer Bewegung in Löserichtung 16 (Fig. 2) über den Dichtring 44 den Klemmring 8 mitnimmt und so vorteilhafterweise zur Erhöhung der radial nach innen gerichteten Klemmkraft gegen den Innenkonus 14 bewegt.

Bei der in den Fig. 1 bis 3 veranschaulichten Ausführungsform ist innerhalb des Basisteils 20 ein Endanschlag zur Einsteckbegrenzung für die Rohrleitung 6 in Form einer Ringstufe 48 gebildet.

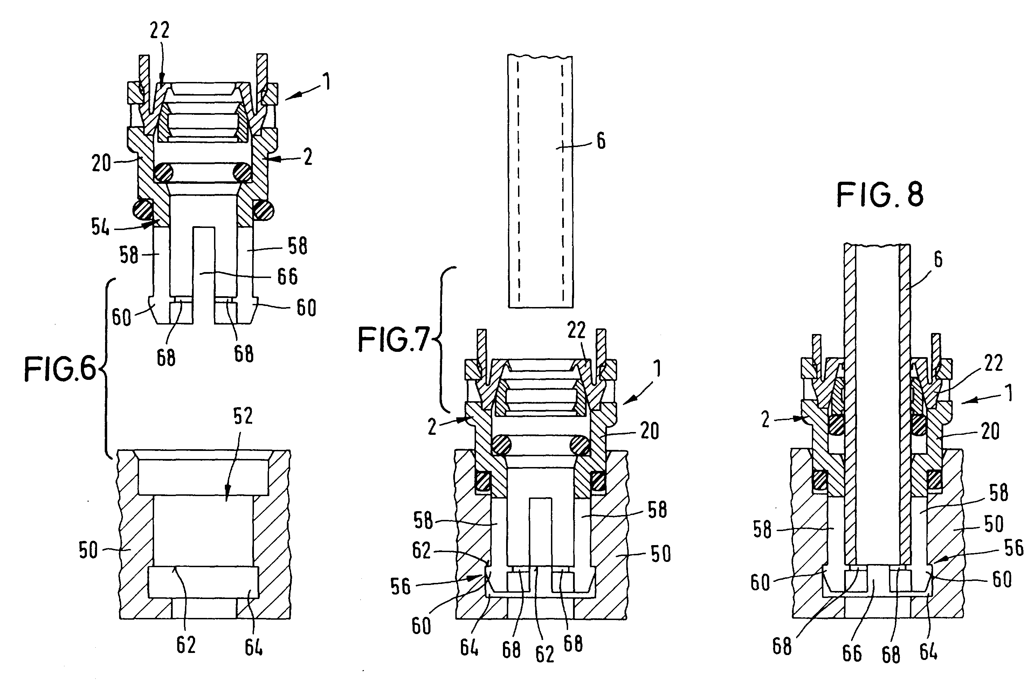

In den Fig. 6 bis 8 ist nun eine vorteilhafte Weiterbildung der Erfindung veranschaulicht. Hierbei ist die erfindungsgemäße Anschlußvorrichtung 1 bzw. das Gehäuseteil 2 mit einem beliebigen Aggregateteil 50 verbindbar. Hierzu weist das Gehäuseteil 2 einen dichtend in eine Stecköffnung 52 des Aggregateteils 50 einsteckbaren Einsteckabschnitt 54 auf, wobei dieser Einsteckabschnitt 54 in der Stecköffnung 52 vorzugsweise über eine schnappbare Formschlußverbindung 56 gehalten wird. Besonders zweckmäßig ist es hierbei, wenn die schnappbare Formschlußverbindung 56 durch die eingesteckte Rohrleitung 6 gegen Lösen arretierbar ist.

Im dargestellten Ausführungbeispiel wird dies dadurch erreicht, daß der Einsteckabschnitt 54 mindestens einen Rastarm aufweist. Vorzugsweise sind aber mindestens zwei - wie dargestellt vier - insbesondere gleichmäßig über den Umfang verteilt (radialsymmetrisch) angeordnete und sich im wesentlichen axial, parallel zur Steckachse 36 erstreckende, in radialer Richtung federelastische Rastarme 58 vorgesehen. Jeder Rastarm 58 hintergreift mit mindestens einem Rastnocken 60 eine Stufenfläche 62 des Aggregateteils 50 formschlüssig. Hierbei kann eventuell auch eine Ausgestaltung analog zu Fig. 2a vorgesehen sein. Die Rohrleitung 6 ist hierbei vorteilhafterweise durch die Aufnahmeöffnung 4 hindurch derart bis in den Rastarm-Bereich einsteckbar, daß durch Anlage der Rastarme 58 an der Rohrleitung 6 eine radiale Lösebewegung der Rastarme 58 ausgeschlossen ist. Dieser Zustand ist in Fig.8 dargestellt. Die zur Erzeugung eines Formschlusses mit den Rastnocken 60 zusammenwirkende Stufenfläche 62 ist bevorzugt durch eine ringnutartige Erweiterung 64 der Stecköffnung 52 gebildet. Die vorzugsweise vier Rastarme 58 des Einsteckabschnittes 54 sind jeweils durch axiale Schlitze 66 gebildet bzw. voneinander getrennt.

Bei dieser Ausführungsform nach Fig. 6 bis 8 fehlt somit die oben beschriebene Ringstufe 48 als Einsteckbegrenzung, vielmehr weisen hier die Rastarme 58 in ihrem freien Endbereich radial nach innen ragende Auflagestege 68 als Einsteckbegrenzung für die Rohrleitung auf. Diese Funktion ist in Fig. 8 gut zu erkennen.

## Patentansprüche

1. Anschlußvorrichtung (1) zum schnellen und lösbaren Anschluß mindestens einer Kunststoff-Rohrleitung (6), bestehend aus einem Gehäuseteil (2) mit mindestens einer Aufnahmeöffnung (4) zum Einstecken der Rohrleitung (6) sowie aus einem in der Aufnahmeöffnung (4) angeordneten Klemmring (8), der zum Arretieren der Rohrleitung (6) über einen Außenkonus (12) mit einem Innenkonus (14) des Gehäuseteils (2) zusammenwirkt, wobei das Gehäuseteil (2) zwecks Lösbarkeit der Rohrleitung (6) zweiteilig aus einem Basisteil (20) und einem lösbar mit diesem verbundenen, den Innenkonus aufweisenden Einsatzteil (22) besteht und das Einsatzteil (22) über eine schnappbare Formschlußverbindung (24) mit dem Basisteil (20) verbunden ist,
**dadurch gekennzeichnet,** daß das Einsatzteil (22) eine innere, umlaufende Dichtlippe (42) zur dichtenden Anlage auf der Außenumfangsfläche der Rohrleitung (6) aufweist, wobei die Dichtlippe (42) sich vor dem Einstecken der Rohrleitung (6) derart in Einsteckrichtung (18) schräg nach innen erstreckt, daß sie durch die eingesteckte Rohrleitung (6) etwas elastisch aufgeweitet wird und dann dichtend anliegt.

2. Anschlußvorrichtung nach Anspruch 1,
**dadurch gekennzeichnet,** daß das Einsatzteil aus einem in eine Erweiterung (26) der Aufnahmeöffnung (4) des Basisteils (20) einsetzbaren, den Innenkonus (14) aufweisenden, in Umfangsrichtung geschlosssenen Zentrierring (28) und mindestens zwei insbesondere gleichmäßig über den Umfang verteilt angeordneten, federelastischen Rastarmen (30) besteht, wobei jeder Rastarm (30) mit einem Rastnocken (32) in eine Rastöffnung (34) des Basisteils (20) eingreift.

3. Anschlußvorrichtung nach Anspruch 2,
**dadurch gekennzeichnet,** daß jeder Rastarm (30) einen aus dem Basisteil (20) ragenden Betätigungsabschnitt (40) aufweist.

4. Anschlußvorrichtung nach einem der Ansprüche 1 bis 3,
**dadurch gekennzeichnet,** daß das Einsatzteil (22) im Bereich der schnappbaren Formschlußverbindung (24) derart ausgebildet ist, daß eine von der Formschlußverbindung (24) bewirkte axiale Haltekraft (F_{H}) sich proportional zu einer in Löserichtung (16) wirkenden Kraft (F_{L}) verhält.

5. Anschlußvorrichtung nach einem der Ansprüche 2 bis 4,
**dadurch gekennzeichnet,** daß die schnappbare Formschlußverbindung (24) im Bereich jedes Rastnockens (32) und der zugehörigen Rastöffnung (34) mit einem Hinterschneidungswinkel (β) größer/gleich, insbesondere größer, 90° ausgebildet ist.

6. Anschlußvorrichtung nach einem der Ansprüche 1 bis 5,
**dadurch gekennzeichnet,** daß auf der dem Einsatzteil (22) abgekehrten Seite des Klemmringes (8) zwischen diesem und einer Ringstufe (46) des Basisteils (20) ein Dichtring (44) derart angeordnet ist, daß die eingesteckte Rohrleitung (6) bei einer Bewegung in Löserichtung (16) über den Dichtring (44) den Klemmring (8) mitnimmt und zur Erhöhung der radialen Klemmkraft gegen den Innenkonus (14) bewegt.

7. Anschlußvorrichtung nach einem oder mehreren der Ansprüche 1 bis 6,
**dadurch gekennzeichnet,** daß das Gehäuseteil (2) einen dichtend in eine Stecköffnung (52) eines Aggregateteils (50) einsteckbaren Einsteckabschnitt (54) aufweist, wobei der Einsteckabschnitt (54) in der Stecköffnung (52) über eine schnappbare Formschlußverbindung (56) gehalten wird und die schnappbare Formschlußverbindung (56) vorzugsweise durch die eingesteckte Rohrleitung (6) gegen Lösen arretierbar ist.

8. Anschlußvorrichtung nach Anspruch 7,
**dadurch gekennzeichnet,** daß der Einsteckabschnitt (54) mindestens einen, vorzugsweise mindestens zwei insbesondere gleichmäßig über den Umfang verteilt angeordnete, sich im wesentlichen axial, parallel zur Steckachse (36) erstreckende, in radialer Richtung federelastische Rastarme (58) aufweist, wobei der bzw. jeder Rastarm (58) mit mindestens einem Rastnocken (60) eine Stufenfläche (62) des Aggregateteils (50) formschlüssig hintergreift, wobei die Rohrleitung (6) durch die Aufnahmeöffnung (4) hindurch derart in den Rastarm-Bereich einsteckbar ist, daß durch Anlage der/des Rastarme/s (58) an der Rohrleitung (6) eine radiale Lösebewegung der/des Rastarme/s (58) ausgeschlossen ist.

9. Anschlußvorrichtung nach Anspruch 8,
**dadurch gekennzeichnet,** daß der Einsteckabschnitt (54) vier Rastarme (58) aufweist, zwischen denen jeweils axiale Schlitze (66) gebildet sind.

10. Anschlußvorrichtung nach Anspruch 8 oder 9
**dadurch gekennzeichnet,** daß die Rastarme (58) in ihrem freien Endbereich innere Auflagestege (68) als Einsteckbegrenzung für die Rohrleitung (6) aufweisen.

## Claims

1. Connecting device (1) for the quick and releasable connection of at least one plastic pipe (6), comprising a housing part (2), with at least one receiving opening (4) for the insertion of the pipe (6), and a clamping ring (8), which is arranged in the receiving opening (4) and, for the purpose of arresting the pipe (6), interacts with an inner cone (14) of the housing part (2) via an outer cone (12), it being the case that, for releasability of the pipe (6), the housing part (2) is made in two parts and comprises a base part (20) and an insert part (22), which is connected to said base part in a releasable manner and has the inner cone, and the insert part (22) is connected to the base part (20) via a snap-action form-fit connection (24), characterized in that the insert part (22) has an inner, peripheral sealing lip (42) for sealing abutment against the outer circumferential surface of the pipe (6), it being the case that, before the insertion of the pipe (6), the sealing lip (42) extends obliquely inwards in the insertion direction (18) such that it is widened somewhat elastically by the inserted pipe (6) and then butts against the same in a sealing manner.

2. Connecting device according to Claim 1, characterized in that the insert part comprises a circumferentially closed centring ring (28), which can be inserted into a widened portion (26) of the receiving opening (4) of the base part (20) and has the inner cone (14), and at least two resilient1y elastic latching arms (30), which are distributed, in particular, uniformly over the circumference, each latching arm (30) engaging in a latching opening (34) of the base part (20) by way of a latching protrusion (32).

3. Connecting device according to Claim 2, characterized in that each latching arm (30) has an actuating section (40) projecting out of the base part (20).

4. Connecting device according to one of Claims 1 to 3, characterized in that, in the region of the snap-action form-fit connection (24), the insert part (22) is designed such that an axial retaining force (F_{H}) caused by the form-fit connection (24) is proportional to a force (F_{L}) acting in the release direction (16).

5. Connecting device according to one of Claims 2 to 4, characterized in that the snap-action form-fit connection (24), in the region of each latching protrusion (32) and of the associated latching opening (34), is designed with an undercut angle (β) greater than or equal to, in particular greater than, 90°.

6. Connecting device according to one of Claims 1 to 5, characterized in that, on that side of the clamping ring (8) which is directed away from the insert part (22), a sealing ring (44) is arranged between said clamping ring and an annular step (46) of the base part (20) such that, in the case of a movement in the release direction (16), the inserted pipe (6), via the sealing ring (44), carries along the clamping ring (8) and moves against the inner cone (14) in order to increase the radial clamping force.

7. Connecting device according to one or more of Claims 1 to 6, characterized in that the housing part (2) has an insertion section (54) which can be inserted in a sealing manner into an insertion opening (52) of a subassembly part (50), it being the case that the insertion section (54) is retained in the insertion opening (52) via a snap-action form-fit connection (56), and the snap-action form-fit connection (56) can be arrested against release preferably by the inserted pipe (6).

8. Connecting device according to Claim 7, characterized in that the insertion section (54) has at least one radially resilient latching arm (58), but preferably at least two radially resilient latching arms (58), which are distributed, in particular, uniformly over the circumference and extend essentially axially, parallel to the insertion axis (36), the or each latching arm (58) engaging in a form-fitting manner behind a stepped surface (62) of the subassembly part (50) by way of at least one latching protrusion (60), and it being possible for the pipe (6) to be inserted, through the receiving opening (4), into the latching-arm region such that abutment of the latching arm or arms (58) against the pipe (6) rules out a radial release movement of the latching arm or arms (58).

9. Connection device according to Claim 8, characterized in that the insertion section (54) has four latching arms (58), between which axial slits (66) are formed in each case.

10. Connecting device according to Claim 8 or 9, characterized in that, in their free end region, the latching arms (58) have inner bearing webs (68) as an insertion-limiting means for the pipe (6).

## Revendications

1. Dispositif de raccordement (1) pour le raccordement rapide et démontable d'au moins une conduite tubulaire (6) en matière plastique, composé d'une partie boîtier (2) présentant au moins une ouverture réceptrice (4) pour l'emmanchement de la conduite tubulaire (6), ainsi que d'une bague de coincement (8) disposée dans l'ouverture réceptrice (4), qui coopère, par un cône extérieur (12), avec un cône intérieur (14) de la partie boîtier (2) pour arrêter la conduite tubulaire (6), dans lequel, pour permettre de déconnecter la conduite tubulaire (6), la partie boîtier (2) étant réalisée en deux parties, comprenant une partie de base (20) et une insertion (22) qui y est assemblée de façon démontable et qui présente le cône intérieur, et l'insertion (2) étant assemblée à la partie de base (20) par un assemblage par sûreté de forme encliquetable, caractérisé en ce que l'insertion (22) présente une lèvre d'étanchéité intérieure périphérique (42) destinée à s'appuyer à joint étanche sur la surface périphérique extérieure de la conduite tubulaire (6), la lèvre d'étanchéité (42) s'étendant obliquement vers l'intérieur, dans le sens de l'emmanchement (18), avant l'emmanchement de la conduite tubulaire (6), de manière à être légèrement élargie élastiquement par la conduite tubulaire (6) emmanchée, puis à s'appliquer à joint étanche.

2. Dispositif de raccordement selon la revendication 1, caractérisé en ce que l'insertion est composée d'une bague de centrage (28), présentant le cône intérieur (14) fermée dans la direction périphérique, et qui peut être encastrée dans un élargissement (26) de l'ouverture réceptrice (4) de la partie de base (20), et d'au moins deux bras de verrouillage (30) élastiques à la façon de ressorts, en particulier, uniformément répartis sur la périphérie, chaque bras de verrouillage (30) étant engagé, par un ergot de verrouillage (32), dans une ouverture de verrouillage (34) de la partie de base (20).

3. Dispositif de raccordement selon la revendication 2, caractérisé en ce que chaque bras de verrouillage (30) présente un segment d'actionnement (40) qui fait saillie en dehors de la partie de base (20).

4. Dispositif de raccordement selon une des revendications 1 à 3, caractérisé en ce que l'insertion (22) est configurée, dans la région de l'assemblage par sûreté de forme encliquetable (24), de telle manière qu'une force de retenue axiale (F_{H}) engendrée par l'assemblage par sûreté de forme (24) soit proportionnelle à une force (F_{L}) qui agit dans le sens de la séparation (16).

5. Dispositif de raccordement selon une des revendications 2 à 4, caractérisé en ce que, dans la région de chaque ergot de verrouillage (32) et de l'ouverture de verrouillage (34) correspondante, l'assemblage par sûreté de forme encliquetable (24) est réalisé avec un angle de contre-dépouille (β) supérieur/égal, en particulier supérieur, à 90°.

6. Dispositif de raccordement selon une des revendications 1 à 5, caractérisé en ce qu'une bague d'étanchéité (44) est disposée sur le côté de la bague de coincement (8) qui est éloigné de l'insertion (22), entre cette bague et un élément annulaire en escalier (46) de la partie de base (20), de telle manière que, lors d'un déplacement dans le sens de la séparation (16), la conduite tubulaire emmanchée (6) entraîne avec elle la bague de coincement (8) par l'intermédiaire de la bague d'étanchéité (44) et l'entraîne vers le cône intérieur (14) pour renforcer la force de coincement radiale.

7. Dispositif de raccordement selon une ou plusieurs des revendications 1 à 6, caractérisé en ce que la partie boîtier (2) présente un segment d'emmanchement (54) qui peut être emmanché à joint étanche dans une ouverture d'emmanchement (52) d'une partie d'appareil (50), le segment d'emmanchement (54) étant maintenu dans l'ouverture d'emmanchement (52) au moyen d'un assemblage par sûreté de forme encliquetable (56) et l'assemblage par sûreté de forme encliquetable (56) pouvant être arrêté à l'encontre de la séparation, de préférence par la conduite tubulaire (6) emmanchée.

8. Dispositif de raccordement selon la revendication 7, caractérisé en ce que le segment d'emmanchement (54) comprend au moins un, de préférence au moins deux, bras de verrouillage (58) élastiques à la façon de ressorts dans la direction radiale, en particulier uniformément répartis sur la périphérie et qui s'étendent, sensiblement axialement, parallèlement à l'axe d'emmanchement (36), le ou chaque bras de verrouillage (58) s'accrochant par sûreté de forme par au moins un ergot de verrouillage (60), derrière une surface en escalier (62) de la partie d'appareil (50), la conduite tubulaire (6) pouvant être emmanchée à travers l'ouverture réceptrice (4) dans la région des bras de verrouillage de telle manière que l'appui du ou des bras de verrouillage (58) contre la conduite tubulaire (6) exclue le mouvement radial de séparation du ou des bras de verrouillage (58).

9. Dispositif de raccordement selon la revendication 8, caractérisé en ce que le segment d'emmanchement (54) présente quatre bras de verrouillage (58) entre lesquels sont formées des fentes axiales (66).

10. Dispositif de raccordement selon la revendication 8 ou 9, caractérisé en ce que les bras de verrouillage (58) présentent dans leur région d'extrémité libre des nervures d'appui (68) servant de limitation d'emmanchement pour la conduite tubulaire (6).
